# EUROPÄISCHE PATENTSCHRIFT

(11) **EP 2 810 820 B1**
(45) Veröffentlichungstag und Bekanntmachung des Hinweises auf die Patenterteilung: **21.06.2017**
(21) Anmeldenummer: 14170683.8
(22) Anmeldetag: 30.05.2014
(51) Int. Cl.: B60N 2/52, B60N 2/50, B60N 2/42

(54) **Fahrzeugsitz und Verfahren zum Federn zweier relativ zueinander verlagerbarer Federungsteile**
Vehicle seat and method for cushioning two suspension parts which are moveable relative to each other
Siège de véhicule et procédé destiné à monter sur ressorts deux éléments amortisseurs mobiles l'un par rapport à l'autre

(30) Priorität: 04.06.2013 DE 102013105720; 19.09.2013 DE 102013110370; 19.09.2013 DE 102013110358
(43) Veröffentlichungstag der Anmeldung: 10.12.2014
(73) Patentinhaber: GRAMMER AG, 92224 Amberg (DE)
(72) Erfinder: Kolb, Jens, 92281 Königstein (DE)
(74) Vertreter: Hannke, Christian

(56) Entgegenhaltungen:
- EP-A1- 2 468 567
- DE-A1-102010 051 325
- FR-A- 1 364 719

## Beschreibung

Die Erfindung betrifft einen Fahrzeugsitz mit einem sich in Fahrzeuglängsrichtung und in Fahrzeugbreitenrichtung erstreckenden Sitzteil sowie mit einem Rücklehnenteil und mit einem Sitzunterbau zum Federn und/oder Dämpfen zumindest des Sitzteils gegenüber einer Karosserie eines Fahrzeugs, bei welchem der Sitzunterbau zumindest eine Horizontalfederungseinrichtung mit einem ersten Federungsteil, mit einem hierzu relativ verlagerbaren weiteren Federungsteil und mit einem deformierbaren Fluidfederungselement zum Federn des Sitzteils gegenüber der Karosserie in Fahrzeuglängsrichtung und/oder in Fahrzeugbreitenrichtung umfasst, wobei das deformierbare Fluidfederungselement mit einer ersten Verbindungsstelle an dem ersten Federungsteil und mit einer weiteren Verbindungsstelle an dem weiteren Federungsteil angeordnet ist.

Des Weiteren betrifft die Erfindung ein Verfahren zum Federn zweier relativ zueinander verlagerbarer Federungsteile einer Horizontalfederungseinrichtung eines ein Sitzteil und ein Rückenlehnenteil umfassenden Fahrzeugsitzes, bei welchem die beiden Federungsteile mithilfe eines deformierbaren Fluidfederungselements zueinander gefedert werden.

Speziell gattungsgemäße Fahrzeugsitze sind aus dem Stand bereits gut bekannt. Sie werden zweckmäßigerweise häufig in geländegängigen Kraftfahrzeugen bzw. Nutzkraftfahrzeugen eingesetzt, um insbesondere einem Fahrer einen höchstmöglichen Fahrkomfort auch bei unwegsamen bzw. nicht befestigten Fahrbahnverhältnissen zu bieten.

Hierzu umfassen diese Fahrzeugsitze sowohl horizontal als auch vertikal wirkende Federungs- sowie Dämpfungseinrichtungen, mittels welchen zumindest das Sitzteil des Fahrzeugsitzes entsprechend gut gegenüber der Karosserie des Fahrzeuges gelagert ist.

Oftmals baut ein Sitzunterbau des Fahrzeugsitzes aufgrund viel Bauraum einnehmender Federungs- und/oder Dämpfungseinrichtungen recht groß. So erfordern aus dem Stand der Technik bekannte Horizontalfederungseinrichtungen oftmals viel Bauraum, da sie stets in der zu federnden Richtung orientierte Federungselemente, wie beispielsweise Schraubenfederungselemente, verwenden. Eine derartige Anordnung führt jedoch dazu, dass die Horizontalfederungseinrichtung zum Erreichen einer bestimmten Federungscharakteristik in der zu federnden Richtung sehr groß baut bzw. nur ein entsprechend kleineres Federungselement verwendet werden kann. Bei letzterer Wahl kann die gewünschte Federungscharakteristik oftmals jedoch nicht oder nur unzureichend erzielt werden. Darüber hinaus sind die Federkennlinien insbesondere der in den Horizontalfederungseinrichtungen verbauten Federungselemente nicht oder nur unzureichend veränderbar bzw. beeinflussbar, wodurch die resultierende Federungscharakteristik nicht optimal eingestellt werden kann.

Aus der Offenlegungsschrift DE 10 2010 055 342 A1 ist ein gattungsgemäßer Fahrzeugsitz für ein Fahrzeug bekannt, der unter anderem eine Horizontalfederungseinrichtung aufweist, welche zumindest ein in einem Aufnahmevolumen aktiv veränderbares und sich zwischen zwei Anbringungsbereichen länglich erstreckendes Fluidfederelement umfasst, auf das geneigt zu seiner Längsrichtung mit einer Deformationseinrichtung zum Verformen, insbesondere zum Biegen, des Fluidfederelementes Druckkräfte aufbringbar sind. Durch die so aufgebaute Federungseinrichtung kann eine kompakt bauende Horizontalfederungseinrichtung in dem Sitzunterbau unterhalb eines Sitzteils des Fahrzeugsitzes integriert werden. Speziell durch das verwendete Fluidfederelement kann zudem die Federcharakteristik in gewissen Grenzen eingestellt werden, so dass die vorstehend genannten Nachteile zumindest teilweise gut überwunden werden können. Ein gattungsgemässer Fahrzeugsitz und ein gattungsgemässes Verfahren zum Federn zweier relativ zueinander verlagerbarer Federungsteile sind aus dem Dokument FR 1364719A bekannt. Es ist Aufgabe vorliegender Erfindung, gattungsgemäße Fahrzeugsitze, insbesondere deren Horizontalfederungseinrichtungen, noch kompakter zu bauen.

Die Aufgabe der Erfindung wird von einem Fahrzeugsitz mit den im Anspruch 1 angegebenen Merkmalen gelöst.

Die Erfindung baut auf dem gattungsgemäßen Stand der Technik dadurch auf, dass das deformierbare Fluidfederungselement zwischen den beiden Federungsteilen derart angeordnet ist, dass es bei einer Relativbewegung der beiden Federungsteile zueinander ausschließlich durch diese beiden Federungsteile deformiert wird. Hierdurch kann das ausschließlich mithilfe der beiden Federungsteile deformierbare Fluidfederungselement noch kompakter in den Fahrzeugsitz integriert werden, und insbesondere der Sitzunterbau kann noch bauteilreduzierter gebaut werden.

Im Sinne der Erfindung handelt es sich bei dem ersten Federungsteil vorzugsweise um ein sitzteilseitig angebrachtes Oberteil der Horizontalfederungseinrichtung, wobei dieses sitzteilseitige Oberteil ein Bauteil oder eine Bauteilgruppe ist, an welches bzw. an welcher das Sitzteil angeordnet ist. Gegebenenfalls umfasst das erste Federungsteil bzw. das sitzteilseitige Oberteil sogleich das Sitzteil des Fahrzeugsitzes, wodurch sich der Aufbau der Horizontalfederungseinrichtung weiter vereinfachen kann.

Bei dem weiteren Federungsteil handelt es sich vorzugsweise um ein karosserieseitig angebrachtes Unterteil der Horizontalfederungseinrichtung, wobei dieses karosserieseitige Unterteil vorliegend ein Bauteil oder eine Bauteilgruppe ist, welches bzw. welcher an dre Karosserie des Fahrzeugs angeordnet ist. Gegebenenfalls umfasst das weitere Federungsteil bzw. das karosserieseitige Unterteil sogleich einen Teilbereich der Karosserie.

Insofern werden die Begrifflichkeiten "erstes Federungsteil" und "sitzteilseitiges Oberteil" sowie "weiteres Federungsteil" und "karosserieseitiges Unterteil" synonym und somit austauschbar verwendet.

Der Begriff "Horizontalfederungseinrichtung" beschriebt im Sinne der Erfindung eine Linearhorizontalfederungseinrichtung, mittels welcher insbesondere das erste Federungsteil bzw. das sitzteilseitige Oberteil mit einer Federungskomponente in Fahrzeuglängsrichtung und/oder in Fahrzeugbreitenrichtung gegenüber dem weiteren Federungsteil bzw. dem karosserieseitigen Unterteil federnd gelagert ist, wobei die Horizontalfederungseinrichtung ungedämpft und gedämpft ausgeführt sein kann.

Das deformierbare Fluidfederungselement stellt im Sinne der Erfindung somit eine Koppeleinrichtung dar, mittels welcher das erste Federungsteil bzw. das sitzteilseitige Oberteil gegenüber dem weiteren Federungsteil bzw. dem karosserieseitigen Unterteil derart mechanisch gekoppelt werden kann, dass das sitzteilseitige Oberteil das karosserieseitige Unterteil mit einer Horizontalfederungskomponente relativ zueinander verlagerbar angeordnet sind.

Als ausschließlich mithilfe der beiden Federungsteile deformierbares Fluidfederungselement kommt idealerweise ein Pneumatikfederungselement in Frage, da diesem für den vorliegenden Zweck ein ideales Ansprechverhalten innewohnt.

Es versteht sich, dass das deformierbare Fluidfederungselement nahezu beliebiger Gestalt sein kann, solange eine Federung in Fahrzeuglängsrichtung und/oder Fahrzeugbreitenrichtung gewährleistet werden kann.

Durch die Form bzw. körperliche Gestalt und/oder die Beschaffenheit (Eigensteifigkeit), insbesondere bezüglich der verwendeten Materialien und gegebenenfalls auch bezüglich gezielt angeordneter Verstärkungs- oder -schwächungsbereiche oder dergleichen, kann eine sehr differenzierte Progression der Federkennlinie bei einer Scherung und/oder einer aktiv erzeugten Innendruckveränderung, Innendruckanhebung oder -senkung, erzielt werden.

Vorzugsweise erstreckt sich das deformierbare Fluidfederungselement länglich quer zu der Horizontalfederungsrichtung in Fahrzeuglängsrichtung oder Fahrzeugbreitenrichtung. Aber auch eine hiervon abweichende Lageanordnung kann vorgesehen sein.

Vorliegend ist das ausschließlich mithilfe der beiden Federungsteile deformierbare Fluidfederungselement mit seinem ersten Ende durch eine erste Verbindungsstelle an dem ersten Federungsteil und mit seinem dem ersten Ende gegenüberliegenden zweiten Ende durch eine zweite Verbindungsstelle an dem weiteren Federungsteil befestigt.

Das Sitzteil dient hierbei zum Aufnehmen einer Person, insbesondere des Fahrers, eines mit dem erfindungsgemäßen Fahrzeugsitz ausgerüsteten Fahrzeugs. Dementsprechend dient das Rückenlehnenteil zum rückseitigen Abstützen der auf dem Sitzteil Platz nehmenden Person.

Sind die beiden Verbindungsstellen des deformierbaren Fluidfederungselements die einzigen Angriffsbereiche insbesondere der Horizontalfederungseinrichtung, mittels welchen das deformierbare Fluidfederungselement bei der Relativbewegung der beiden Federungsteile zueinander deformierbar ist, kann die Horizontalfederungseinrichtung bauteilreduzierter bereitgestellt werden, als dies bisher im Stand der Technik üblich ist.

Somit ist es vorteilhaft, wenn das deformierbare Fluidfederungselement immer ausschließlich durch die beiden quer zur Hautfederungsrichtung voneinander beabstandet angeordneten Federungsteile gehaltert und geführt ist.

Es ist insofern auch vorteilhaft, wenn das deformierbare Fluidfederungselement einen langgestreckten schlauchartigen Grundkörper aufweist, der einen länglichen, verschließbaren Hohlraum zur Aufnahme eines geeigneten Federungsfluid umfasst.

Als Federungsfluid kommt im einfachsten Fall Luft in Frage. Es können jedoch auch andere Gase verwendet werden.

Ist das deformierbare Fluidfederungselement zumindest in Hauptfederungsrichtung frei schwingend zwischen den beiden Federungsteilen angeordnet, kann zur Gänze ausgeschlossen werden, dass das deformierbare Fluidfederungselement von einem anderen Bauteil als von den beiden Federungsteilen der Horizontalfederungseinrichtung deformiert wird. Insofern kann hierdurch gewährleistet werden, dass eine Federung ausschließlich aufgrund von Scherkräften des deformierbaren Fluidfederungselements erfolgt. Darüber hinaus kann ausgeschlossen werden, dass das deformierbare Fluidfederungselement durch Reibung mit anderen Bauteilen einem erhöhten Verschleiß unterliegt. Hierdurch erhöht sich die Lebensdauer des deformierbaren Fluidfederungselements erheblich.

Das deformierbare Fluidfederungselement kann baulich besonders vorteilhaft zwischen den beiden Federungsteilen integriert werden, wenn erfindungsgemäss das deformierbare Fluidfederungselement länglich ausgestaltet und mit seinen am weitesten voneinander beabstandeten Endbereichen jeweils an den beiden Federungsteilen befestigt ist.

Hierzu befinden sich die Verbindungsstellen des deformierbaren Fluidfederungselements an dessen beiden am weitesten voneinander beabstandet angeordneten Endbereichen.

Eine vorteilhafte Ausführungsvariante sieht vor, dass das deformierbare Fluidfederungselement an dem einen der beiden Federungsteile mit einem Festlager und an dem anderen der beiden Federungsteile mit einem Loslager befestigt ist. Obwohl das deformierbare Fluidfederungselement an sich verformbar ist und somit Ausgleichsbewegungen ausführen kann, ist es vorteilhaft, wenn es mit einer Loslager-Festlagerkombination in der Horizontalfederungseinrichtung gehaltert ist. Hierdurch kann das deformierbare Fluidfederungselement einerseits beispielsweise drehbeweglich und andererseits ortsfest an dem jeweiligen Federungsteil befestigt sein.

Vorzugsweise umfasst das Loslager ein Drehgelenk, wodurch ein zusätzlicher Längenausgleich des deformierbaren Fluidfederungselements quer zur Hauptfederungsrichtung baulich sehr einfach erzielt werden kann, wenn das deformierbare Fluidfederungselement bei einer Federungsbewegung deformiert und/oder eine Veränderung des Innendrucks vorgenommen wird.

Insbesondere durch eine weitere Bewegungseinschränkung im Zusammenhang mit einem entsprechend ausgestalteten Loslager, insbesondere des Drehgelenks, kann vorteilhafterweise eine zusätzliche Progression an der Horizontalfederungseinrichtung erzielt werden, wenn beispielsweise durch einen Innendruckanstieg eine Dehnung bezüglich des Querschnitts des deformierbaren Fluidfederungselements eine Verkürzung der Längserstreckung des deformierbaren Fluidfederungselements als Kraftanstieg in der Auslenkung wirkt.

Es ist vorteilhaft, wenn das deformierbare Fluidfederungselement an einem seiner Enden eine quer zur Hauptfederungsrichtung wirkende Längenausgleichseinrichtung aufweist.

Es versteht sich, dass diese Längenausgleichseinrichtung konstruktiv unterschiedlich umgesetzt werden kann. Eine baulich robuste und damit wartungsarme Ausführungsvariante sieht vor, dass die Längenausgleichseinrichtung ein Hebelarmelement umfasst, welches gelenkig an einem der beiden Federungsteile angeordnet ist. Durch dieses drehgelenkig angelenkte Hebelarmelement kann bei entsprechender Ausgestaltung die Progression des deformierbaren Fluidfederungselements zusätzlich gut beeinflusst werden.

Vorzugsweise ist dieses drehgelenkig angelenkte Hebelarmelement an dem ersten Federungsteil, also dem sitzteilseitigen Oberteil der Horizontalfederungseinrichtung, befestigt.

Eine weitere vorteilhafte Ausführungsvariante sieht vor, dass die beiden Verbindungsstellen des deformierbaren Fluidfederungselements in Hauptfederungsrichtung parallel verschieblich zueinander an den beiden Federungsteilen gehaltert sind.

Wie vorstehend bereits erwähnt, befinden sich die Verbindungsstellen idealerweise in den Endbereichen des deformierbaren Fluidfederungselements, wobei diese Endbereiche insbesondere bei einem länglich ausgestalteten deformierbaren Fluidfederungselement im Sinne der Erfindung diejenigen sind, welche am weitesten voneinander beabstandet angeordnet sind.

Um vielfältig einstellbare Federkennlinien an dem deformierbaren Fluidfederelement erzeugen zu können, ist es vorteilhaft, wenn das deformierbare Fluidfederungselement einen länglichen, schlauchartigen und elastischen Grundkörper umfasst, welcher einen geschlossenen Hohlraum aufweist, in welchem ein Federungsfluidvolumen in Abhängigkeit einer gemessenen Federungsstrecke einfüllbar ist.

Die Aufgabe der Erfindung wird darüber hinaus von einem Verfahren mit den im Anspruch 10 angegebenen Merkmalen gelöst, wobei die Erfindung ebenfalls auch auf dem diesbezüglichen Stand der Technik dadurch aufbaut, dass ein Innendruck innerhalb des deformierbaren Fluidfederungselements in Abhängigkeit von einer Intensität einer Schwingungseinleitung und/oder von einer gemessenen Federungsstrecke aktiv von außerhalb verändert wird, um die Federkennlinie an die aktuelle Schwingungseinleitung anzupassen. Durch diese zusätzliche aktive Beeinflussung des Innendrucks des Federungsfluids innerhalb des deformierbaren Fluidfederungselements gelingt es, insbesondere hinsichtlich des erfindungsgemäßen Fahrzeugsitzes, das vorliegende deformierbare Fluidfederungselement während seiner Federungsarbeit aktiv hinsichtlich seiner Federungsleistung zu modulieren, wodurch eine besonders gut an aktuell auftretende Schwingungsanregungen anpassbare Horizontalfederungseinrichtung bereitgestellt werden kann.

Besonders vorteilhaft ist es, wenn der Innendruck innerhalb des deformierbaren Fluidfederungselements vor oder während einer ersten Federungsbewegung in Hauptfederungsrichtung aktiv von außen erhöht wird, während der Innendruck vor oder während einer der ersten Federungsbewegung entgegengesetzten Federungsbewegung aktiv von außen verringert wird, um ein Aufschaukeln aufgrund zu hoher Rückstellkräfte des deformierbaren Fluidfederungselements zu vermeiden.

Um den Innendruck des Federungsfluids innerhalb des Hohlraums des deformierbaren Fluidfederungselements aktiv besonders in Bezug auf eine aktuelle Federungssituation verändern zu können, ist es vorteilhaft, wenn die Horizontalfederungseinrichtung noch eine Einrichtung zum Messen einer Beschleunigung und/oder eines Verlagerungsweges hinsichtlich der Federungsteile der Horizontalfederungseinrichtung umfasst. Hierdurch kann das erforderliche Federungsvermögen des deformierbaren Fluidfederungselements besonders gut bestimmt werden, so dass die Federkennlinie dieses deformierbaren Fluidfederungselements immer für die jeweilige Federungsstrecke bzw. die jeweilige Federungsbewegung hinsichtlich Vor-und Rückfederung optimal gewählt werden kann.

Es versteht sich, dass es von Vorteil ist, wenn an dem Fahrzeugsitz eine entsprechend geeignete Einrichtung zur aktiven Zufuhr oder Abfuhr eines Federungsfluids vorhanden ist, wie etwa eine Kompressoreinrichtung und/oder eine Reservoireinrichtung zur Bevorratung eines Federungsfluids.

Die Kompressor- und/oder Reservoireinrichtungen stehen hierbei derart mit dem Hohlraum des deformierbaren Fluidfederungselements in fluidischer Wirkverbindung, dass ein Federungsfluid im Bedarfsfall diesem Hohlraum hinzugefügt oder entnommen werden kann, je nachdem welche aktuellen Federungsanforderungen an das deformierbare Fluidfederungselement gestellt sind.

Weitere Vorteile, Ziele und Eigenschaften vorliegender Erfindung werden anhand anliegender Zeichnung und nachfolgender Beschreibung erläutert, in welchen beispielhaft eine vorteilhafte Integration eines deformierbaren Fluidfederungselements in einer Horizontalfederungseinrichtung eines Fahrzeugsitzes dargestellt und beschrieben ist. In der Zeichnung zeigen:
- Figur 1: schematisch eine Seitenansicht eines in einem Fahrzeug angeordneten Fahrzeugsitzes mit einem ausschließlich an einem sitzteilseitigen Oberteil einer Horizontalfederungseinrichtung und an einem karosserieseitigen Unterteil der Horizontalfederungseinrichtung befestigten deformierbaren Fluidfederungselement;
- Figur 2: schematisch eine Ansicht des ausschließlich durch das sitzteilseitige Oberteil und durch das karosserieseitige Unterteil deformierbaren und in dem Fahrzeugsitz aus der Figur 1 integrierten Fluidfederungselements in unterschiedlichen Federungspositionen; und
- Figur 3: schematisch eine weitere Ansicht des deformierbaren Fluidfederungselements aus der Figur 2 mit einer daran angeschlossenen Bereitstellungseinrichtung zum Bereitstellen eines zusätzlichen Fluidfederungsvolumens.

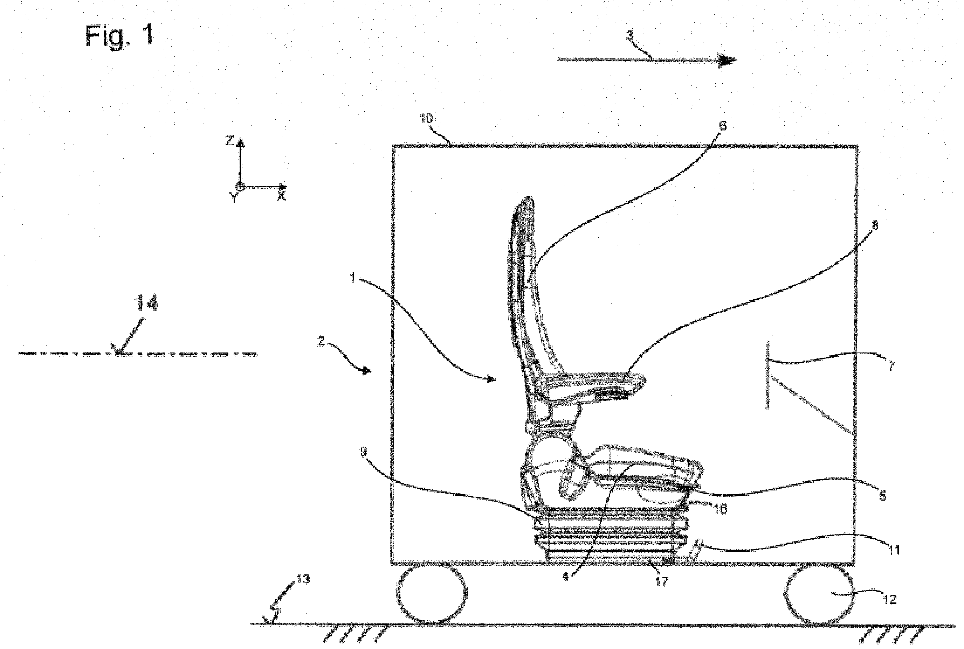

Der in der Figur 1 schematisch dargestellte Fahrzeugsitz 1 ist in einem Fahrzeug 2 in Vorwärtsfahrtrichtung 3 ausgerichtet montiert angeordnet. Insofern ist er in der Fahrzeuglängsrichtung X orientiert angeordnet und weist eine sich in Fahrzeugbreitenrichtung Y und in Fahrzeuglängsrichtung X erstreckenden Sitzfläche 4 eines Sitzteils 5 sowie ein sich in Fahrzeughöhenrichtung Z erstreckendes Rückenlehnenteil 6 auf, die bevorzugt gegenüber dem Sitzteil 5 schwenkbar angeordnet ist. Der Fahrzeugsitz 1 ist vor einem Lenkrad 7 platziert, welches von einer auf dem Fahrzeugsitz 1 sitzenden Person gut bedienbar ist. Weiterhin sind an dem Fahrzeugsitz 1, insbesondere an dessen Rückenlehnenteil 6, mindestens eine Armauflage 8 angeordnet, um den Fahrkomfort der Person zu erhöhen.

Darüber hinaus weist der Fahrzeugsitz 1 noch einen Sitzunterbau 9 auf, mittels welchem der Fahrzeugsitz 1 an einer Karosserie 10 des Fahrzeuges 2 befestigt ist. Am Sitzunterbau 9 ist noch ein Betätigungshebel 11 einer Verschiebeeinrichtung (nicht gezeigt) zu erkennen, mittels welcher der Fahrzeugsitz 1 horizontal gemäß der Fahrzeuglängserstreckung X verlagert werden kann, wenn die Verschiebeeinrichtung durch Betätigen des Betätigungshebels 11 entriegelt wird. Das in der Figur 1 dargestellte Fahrzeug 2 steht mit seinen Rädern 12 (hier nur exemplarisch beziffert) auf einem Untergrund 13, und ist bezogen auf diesen Untergrund 13 fluchtend zu einer fiktiven Horizontalebene 14 ausgerichtet, so dass auch der Fahrzeugsitz 1 und insbesondere das Sitzteil 5 gegenüber dieser fiktiven Horizontalebene 14 nicht geneigt ist.

Der Sitzunterbau 9 weist des Weiteren eine Vielzahl an nicht näher gezeigten Federungs- und/oder Dämpfungseinrichtungen auf, so dass insbesondere das Sitzteil 5 gegenüber der Karosserie 10 gut gefedert bzw. gedämpft in dem Fahrzeug 2 angeordnet ist, wodurch ein besonders hoher Fahrkomfort für die Person, welche auf dem Fahrzeugsitz 1 sitzt, erzielt werden kann. Die Federungseinrichtungs- und/oder Dämpfungseinrichtungen können den Fahrzeugsitz 1 insbesondere in Horizontalrichtung gemäß der Fahrzeuglängsrichtung X und/oder der Fahrzeugbreitenrichtung Y wie auch in Vertikalrichtung gemäß der Fahrzeughöhenrichtung Z federn bzw. dämpfen.

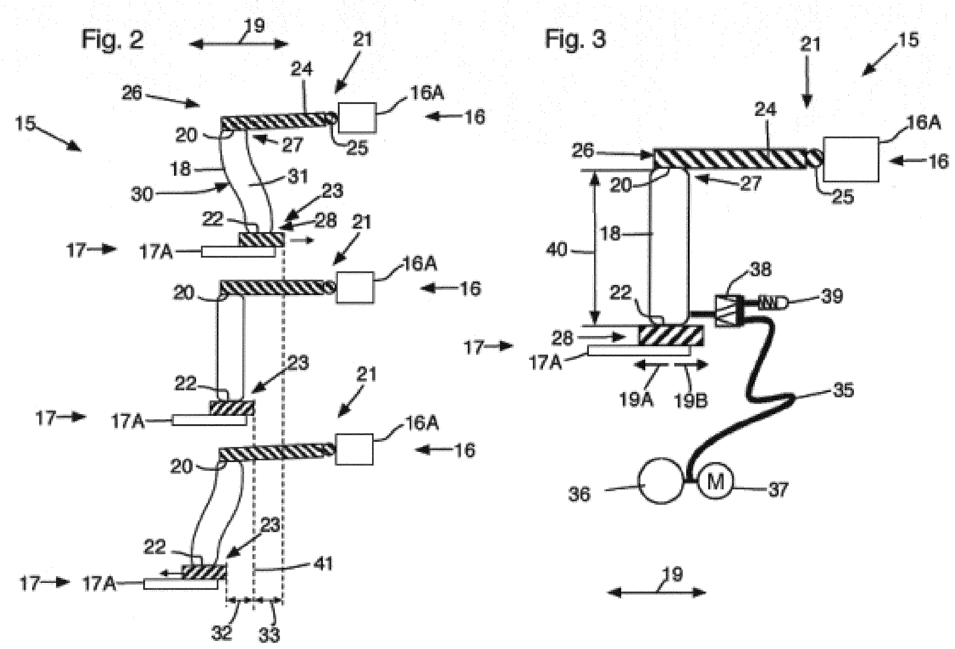

Insbesondere umfasst der Sitzunterbau 2 eine in den Figuren 2 und 3 in ihrer Grundfunktion prinzipiell dargestellte Horizontalfederungseinrichtung 15 mit einem ersten Federungsteil 16 und mit einem weiteren Federungsteil 17, zwischen denen ein deformierbares Fluidfederungsteil 18 derart wechselwirkend angeordnet werden kann, dass speziell das erste Federungsteil 16 in Hauptfederungsrichtung 19 bzw. Horizontalfederungsrichtung relativ verlagerbar gegenüber dem weiteren Federungsteil 17 gelagert ist.

Bei dem deformierbaren Fluidfederungselement 18 handelt es sich in diesem Ausführungsbeispiel um ein Pneumatikfederungselement (hier nicht weiter beziffert).

Das erste Federungsteil 16 umfasst hierbei das sitzteilseitige Oberteil 16A und das weitere Federungsteil 17 umfasst das karosserieseitige Unterteil 17A.

Während das deformierbare Fluidfederungselement 18 an einer ersten Verbindungsstelle 20 mittels eines Loslagers 21 an dem sitzteilseitigen Oberteil 16A drehbeweglich angelenkt ist, ist es an einer weiteren Verbindungsstelle 22 mittels eines Festlagers 23 an dem karosserieseitigen Unterteil 17A starr befestigt.

Diese beiden Verbindungsstellen 20 und 22 bilden erfindungsgemäß die einzigen Angriffseinrichtungen, um das deformierbare Fluidfederungselement 18 beim Federn der Horizontalfederungseinrichtung 15 in Hauptfederungsrichtung 19 zu deformieren.

Insofern ist das deformierbare Fluidfederungselement 18 zwischen den beiden Federungsteilen 16, 17 derart angeordnet, dass es bei einer Relativbewegung der beiden Federungsteile 16, 17 zueinander in Hauptfederungsrichtung 19 ausschließlich durch diese beiden Federungsteile 16 und 17 deformiert wird.

Das Loslager 21 zeichnet sich in diesem Ausführungsbeispiel durch ein Hebelarmelement 24 und ein Drehgelenk 25 aus, wobei das Loslager 21 hinsichtlich des ersten Federungsteils 16 eine Längenausgleichseinrichtung 26 an einem ersten Ende 27 des deformierbaren Fluidfederungselements 18 ausgestaltet, welche eine quer zur Hauptfederungsrichtung 19 erzeugte Längenänderung des deformierbaren Fluidfederungselements 18 ausgleichen kann.

An seinem dem ersten Ende 27 gegenüberliegenden Ende 28 ist das deformierbare Fluidfederungselement 18 starr mit dem weiteren Federungsteil 17 verbunden, wie bereits erwähnt.

Das Hebelarmelement 24 ist mit einer festen Verschraubung (hier nicht explizit gezeigt) an dem Fluidfederungselement 18 festgelegt, so dass insgesamt eine Auslenkung des sitzteilseitigen Oberteils 16A gegenüber dem karosserieseitigen Unterteil 17A, oder umgekehrt, ausschließlich durch eine Scherung bzw. Deformation des Fluidfederungselements 18 möglich ist, wie durch die drei übereinander angeordneten Darstellungen gemäß der Figur 2 gut erkennbar ist.

Das deformierbare Fluidfederungselement 18 besitzt einen länglichen, schlauchartigen und elastisch deformierbaren Grundkörper 30, so dass diese beiden Endbereiche 27 und 28 die am weitesten voneinander beabstandeten Endbereiche des deformierbaren Fluidfederungselements 18 sind.

Der längliche, schlauchartige und elastisch deformierbare Grundkörper 30 weist einen geschlossenen Hohlraum 31 auf, in welchem ein Federungsfluidvolumen (hier nicht beziffert) insbesondere in Abhängigkeit von einer gemessenen Federungsstrecke 32 oder 33 einfüllbar ist.

Insofern kann eine Federung bzw. eine Nulllagenkorrektur sowohl in Richtung einer ersten Federungsbewegung 19A (siehe Figur 3) als auch in Richtung einer entgegengesetzten Federungsbewegung 19B gemäß der Hauptfederungsrichtung 19 erzielt werden.

Das deformierbare Fluidfederungselement 18 kann über eine Fluidmittelleitungsverbindung 35 durch ein Fluidmittelreservoir 36 und/oder einen Kompressor 37 gespeist werden, wobei in der Fluidmittelleitungsverbindung 35 noch ein Zu- und Abluftventil 38 mit einem Drosselelement 39 integriert ist.

Anstelle des Fluidmittelreservoirs 36 und/oder des Kompressors 37 könnte auch eine fluidische Anbindung an ein Luftdrucknetz (hier nicht gezeigt) des Fahrzeugs 2 vorgesehen sein.

Ergänzend kann hinsichtlich dieses Ausführungsbeispiels noch gesagt werden:
Das deformierbare Fluidfederungselement 18 hat das Bestreben sich mit steigendem Druck längs auszurichten. Wird es, wie in den gezeigten Darstellungen, an seinen Enden 27 und 28 fixiert, treten ausschließlich Scherkräfte bei der Verformung des deformierbaren Fluidfederungselements 18 auf. Diese entgegengesetzt zur Auslenkung gerichteten rückführenden Scherkräfte können durch Druckbeaufschlagung geregelt werden.

Eine Scherung des deformierbaren Fluidfederungselements 18 ist bei drucklosen bzw. mit geringem Druck beaufschlagten Fluidfederungselement 18 leichter, da eine geringe Federkonstante vorliegt. Im waagrechten ruhigen Betrieb ist eine weiche Federkennlinie für leichte als auch für schwerere Fahrer zur Schwingungsisolation sinnvoll.

Mit steigender Auslenkung bzw. auch mit steigendem Fahrergewicht wird der Druck und somit die Gegenkraft des deformierbaren Fluidfederungselements 18 erhöht, um ein Anschlagen gegen Endanschläge (hier nicht gezeigt) entgegenzuwirken. Durch diese Scherung wird das deformierbare Fluidfederungselement 18 in der gezeigten Höhe 40 (siehe Figur 3) etwas verkürzt, was mindestens das eine Drehlager bzw. Drehgelenk 25 erforderlich macht. Zusätzlich wird durch das Drehgelenk 25 das übrige Führungssystem nicht quer beansprucht.

Beim Rückweg wird der Druck aus dem deformierbaren Fluidfederungselement 18 abgelassen, so dass die rückführende Kraft reduziert und somit ein Aufschaukeln durch einen Rebound verhindert wird.

Es ist klar, dass hierzu mindestens ein Wegmesssystem (nicht gezeigt) oder unter Umständen auch ein Beschleunigungsmesssystem (hier nicht gezeigt) zur Erfassung der aktuell auftretenden Anregung simultan zur aktuellen Position in der jeweiligen Federstrecke 32 bzw. 33 erforderlich ist.

Einem langfristigen Abweichen der mittigen Ruhelage bzw. einem Auslenken aus der Horizontal-Nulllagenposition 41 heraus, etwa bei einem Betrieb bei Berg- oder Talfahrten, kann durch kontinuierlichen Druckaufbau (steigende Federkennlinie) entgegengewirkt werden, wodurch wiederum ein ausreichender Federweg gewährleistet werden kann.

Durch die Form und Beschaffenheit des deformierbaren Fluidfederungselements 18 kann eine zusätzliche Progression bei Scherung bzw. Druckanstieg in die Federkennlinie eingeprägt werden.

Eine weitere Progression der Federkennlinie lässt sich idealweise durch eine weitere Bewegungseinschränkung im Drehgelenk 25 erzielen, wenn die entstehende Dehnung durch Verkürzung des deformierbaren Fluidfederungselements 18 bei einem Druckanstieg als weiterer Kraftanstieg in der Auslenkung wirkt.

Auch hier könnten kumulativ noch Anlageflächen für das deformierbare Fluidfederungselement 18 vorgesehen werden, um einen zusätzlichen Kräfteanstieg in der Auslenkung zu realisieren.

Es versteht sich, dass es sich bei dem vorstehend erläuterten Ausführungsbeispiel lediglich um eine erste Ausgestaltung der Erfindung handelt. Insofern beschränkt sich die Ausgestaltung der Erfindung nicht auf dieses Ausführungsbeispiel.

### Bezugszeichenliste

- 1: Fahrzeugsitz
- 2: Fahrzeug
- 3: Vorwärtsfahrtrichtung
- 4: Sitzfläche
- 5: Sitzteil
- 6: Rückenlehnenteil
- 7: Lenkrad
- 8: Armauflage
- 9: Sitzunterbau
- 10: Karosserie
- 11: Betätigungshebel
- 12: Räder
- 13: Untergrund
- 14: fiktive Horizontalebene
- 15: Horizontalfederungseinrichtung
- 16: erstes Federungsteil
- 16A: sitzteilseitiges Oberteil
- 17: weiteres Federungsteil
- 17A: karosserieseitiges Unterteil
- 18: deformierbares Fluidfederungsteil
- 19: Hauptfederungsrichtung
- 19A: erste Federungsbewegung
- 19B: zweite Federungsbewegung
- 20: erste Verbindungsstelle
- 21: Loslager
- 22: weitere Verbindungsstelle
- 23: Festlager
- 24: Hebelarmelement
- 25: Drehgelenk
- 26: Längenausgleichseinrichtung
- 27: erstes Ende
- 28: gegenüberliegendes Ende
- 30: Grundkörper
- 31: Hohlraum
- 32: vordere Federungsstrecke
- 33: hintere Federungsstrecke
- 35: Fluidmittelleitungsverbindung
- 36: Fluidmittelreservoir
- 37: Kompressor
- 38: Zu- und Abluftventil
- 39: Drosselelement
- 40: Höhe
- 41: Horizontal-Nulllagenposition

- X: Fahrzeuglängsrichtung
- Y: Fahrzeugbreitenrichtung
- Z: Fahrzeughöhenrichtung

## Patentansprüche

1. Fahrzeugsitz (1) mit einem sich in Fahrzeuglängsrichtung (X) und in Fahrzeugbreitenrichtung (Y) erstreckenden Sitzteil (5) sowie mit einem Rücklehnenteil (6) und mit einem Sitzunterbau (9) zum Federn und/oder Dämpfen zumindest des Sitzteils (5) gegenüber einer Karosserie (10) eines Fahrzeugs (2), bei welchem der Sitzunterbau (9) zumindest eine Horizontalfederungseinrichtung (15) mit einem ersten Federungsteil (16), mit einem hierzu relativ verlagerbaren weiteren Federungsteil (17) und mit einem deformierbaren Fluidfederungselement (18) zum Federn des Sitzteils (5) gegenüber der Karosserie (10) in Fahrzeuglängsrichtung (X) und/oder in Fahrzeugbreitenrichtung (Y) umfasst, wobei das deformierbare Fluidfederungselement (18) mit einer ersten Verbindungsstelle (20) an dem ersten Federungsteil (16) und mit einer weiteren Verbindungsstelle (22) an dem weiteren Federungsteil (17) angeordnet ist,
wobei das deformierbare Fluidfederungselement (18) zwischen den beiden Federungsteilen (16, 17) derart angeordnet ist, dass es bei einer Relativbewegung der beiden Federungsteile (16, 17) zueinander ausschließlich durch diese beiden Federungsteile (16, 17) deformiert wird,
**dadurch gekennzeichnet, dass**
das deformierbare Fluidfederungselement (18) länglich ausgestaltet und mit seinen am weitesten voneinander beabstandeten Endbereichen (27, 28) jeweils an den beiden Federungsteilen (16, 17) befestigt ist.

2. Fahrzeugsitz (1) nach Anspruch 1,
**dadurch gekennzeichnet, dass**
die beiden Verbindungsstellen (20, 22) des deformierbaren Fluidfederungselements (18) die einzigen Angriffsbereiche sind, mittels welchen das deformierbare Fluidfederungselement (18) bei der Relativbewegung der beiden Federungsteile (16, 17) zueinander deformierbar ist.

3. Fahrzeugsitz (1) nach Anspruch 1 oder 2,
**dadurch gekennzeichnet, dass**
das deformierbare Fluidfederungselement (18) immer ausschließlich durch die beiden quer zur Hauptfederungsrichtung (19) voneinander beabstandet angeordneten Federungsteile (16, 17) gehaltert und geführt ist.

4. Fahrzeugsitz (1) nach einem der Ansprüche 1 bis 3,
**dadurch gekennzeichnet, dass**
das deformierbare Fluidfederungselement (18) zumindest in Hauptfederungsrichtung (19) frei schwingend zwischen den beiden Federungsteilen (16, 17) angeordnet ist.

5. Fahrzeugsitz (1) nach einem der Ansprüche 1 bis 4,
**dadurch gekennzeichnet, dass**
das deformierbare Fluidfederungselement (18) an dem einen der beiden Federungsteile (16, 17) mit einem Festlager (23) und an dem anderen der beiden Federungsteile (16, 17) mit einem Loslager (21) befestigt ist, wobei insbesondere das Loslager (21) ein Drehgelenk (25) umfasst.

6. Fahrzeugsitz (1) nach einem der Ansprüche 1 bis 5,
**dadurch gekennzeichnet, dass**
das deformierbare Fluidfederungselement (18) an einem seiner Enden (27) eine quer zur Hauptfederungsrichtung (19) wirkende Längenausgleichseinrichtung (26) aufweist.

7. Fahrzeugsitz (1) nach Anspruch 6,
**dadurch gekennzeichnet, dass**
die Längenausgleichseinrichtung (26) ein Hebelarmelement (24) umfasst, welches gelenkig an einem der beiden Federungsteile (16, 17) angeordnet ist.

8. Fahrzeugsitz (1) nach einem der Ansprüche 1 bis 7,
**dadurch gekennzeichnet, dass**
die beiden Verbindungsstellen (20, 22) des deformierbaren Fluidfederungselements (18) in Hauptfederungsrichtung (19) parallel verschieblich zueinander an den beiden Federungsteilen (16, 17) gehaltert sind.

9. Fahrzeugsitz (1) nach einem der Ansprüche 1 bis 8,
**dadurch gekennzeichnet, dass**
das deformierbare Fluidfederungselement (18) einen länglichen, schlauchartigen und elastischen Grundkörper (30) umfasst, welcher einen geschlossenen Hohlraum (31) aufweist, in welchem ein Federungsfluidvolumen in Abhängigkeit einer gemessenen Federungsstrecke (32, 33) einfüllbar ist.

10. Verfahren zum Federn zweier relativ zueinander verlagerbarer Federungsteile (16, 17) einer Horizontalfederungseinrichtung (15) eines ein Sitzteil (5) und ein Rückenlehnenteil (6) umfassenden Fahrzeugsitzes (1), bei welchem die beiden Federungsteile (16, 17) mittels eines deformierbaren Fluidfederungselements (18) zueinander gefedert werden, **dadurch gekennzeichnet, dass** das deformierbare Fluidfederungselement (18) länglich ausgestaltet und mit seinen am weitesten voneinander beabstandeten Endbereichen (27, 28) jeweils an den beiden Federungsteilen (16, 17) befestigt ist, und ein Innendruck innerhalb des deformierbaren Fluidfederungselements (18) in Abhängigkeit von einer Intensität einer Schwingungseinleitung und/oder von einer gemessenen Federungsstrecke (32, 33) aktiv von außerhalb verändert wird, um die Federkennlinie an die aktuelle Schwingungseinleitung anzupassen.

11. Verfahren nach Anspruch 10,
**dadurch gekennzeichnet, dass**
der Innendruck vor oder während einer ersten Federungsbewegung (19A) in Hauptfederungsrichtung (19) aktiv von außen erhöht wird, während der Innendruck vor oder während einer der ersten Federungsbewegung (19A) entgegengesetzten Federungsrückbewegung (19B) aktiv verringert wird, um ein Aufschaukeln aufgrund zu hoher Rückstellkräfte des deformierbaren Fluidfederungselements (18) zu vermeiden.

## Claims

1. Vehicle seat (1) comprising a seat part (5) extending in the longitudinal direction (X) of the vehicle and in the width direction (Y) of the vehicle and comprising a backrest part (6) and a seat substructure (9) for suspending and/or damping at least the seat part (5) with respect to a body (10) of a vehicle (2), in which the seat substructure (9) comprises at least one horizontal suspension device (15) having a first suspension part (16), another suspension part (17) which is movable relative thereto and a deformable fluid suspension element (18) for suspending the seat part (5) with respect to the body (10) in the longitudinal direction (X) of the vehicle and/or in the width direction (Y) of the vehicle, the deformable fluid suspension element (18) being arranged so as to have a first connection point (20) to the first suspension part (16) and another connection point (22) to the other suspension part (17), the deformable fluid suspension element (18) being arranged between the two suspension parts (16, 17) so as to be deformed solely by these two suspension parts (16, 17) upon relative movement of the two suspension parts (16, 17) relative to each other,
**characterised in that**
the deformable fluid suspension element (18) is elongate and fastened to the two suspension parts (16, 17) by its end regions (27, 28) that are spaced the furthest apart from one another.

2. Vehicle seat (1) according to claim 1,
**characterised in that**
the two connection points (20, 22) of the deformable fluid suspension element (18) are the sole engagement regions by means of which the deformable fluid suspension element (18) can be deformed upon relative movement of the two suspension parts (16, 17) relative to each other.

3. Vehicle seat (1) according to either claim 1 or claim 2,
**characterised in that**
the deformable fluid suspension element (18) is always held and guided solely by the two mutually spaced suspension parts (16, 17) arranged transversely to the main suspension direction (19).

4. Vehicle seat (1) according to any of claims 1 to 3,
**characterised in that**
the deformable fluid suspension element (18) is arranged between the two suspension parts (16, 17) so as to oscillate freely at least in the main suspension direction (19).

5. Vehicle seat (1) according to any of claims 1 to 4,
**characterised in that**
the deformable fluid suspension element (18) is fastened to one of the two suspension parts (16, 17) by means of a fixed bearing (23) and to the other of the two suspension parts (16, 17) by means of a floating bearing (21 ), in particular the floating bearing (21) comprising a pivotal point (25).

6. Vehicle seat (1) according to any of claims 1 to 5,
**characterised in that**
the deformable fluid suspension element (18) comprises, at one of its ends (27), a length-compensating device (26) which acts transversely to the main suspension direction (19).

7. Vehicle seat (1) according to claim 6,
**characterised in that**
the length-compensating device (26) comprises a lever arm element (24) which is hingedly arranged on one of the two suspension parts (16, 17).

8. Vehicle seat (1) according to any of claims 1 to 7,
**characterised in that**
the two connection points (20, 22) of the deformable fluid suspension element (18) are held on the two suspension parts (16, 17) so as to be displaceable in parallel with and relative to each other in the main suspension direction (19).

9. Vehicle seat (1) according to any of claims 1 to 8,
**characterised in that**
the deformable fluid suspension element (18) comprises an elongate, tubular and resilient main body (30) which has a closed cavity (31) which can be filled with a volume of suspension fluid according to a measured suspension path (32, 33).

10. Method for suspending two suspension parts (16, 17) which are movable relative to each other and belong to a horizontal suspension device (15) of a vehicle seat (1) comprising a seat part (5) and a backrest part (6), in which the two suspension parts (16, 17) are suspended relative to each other by means of a deformable fluid suspension element (18),
**characterised in that**
the deformable fluid suspension element (18) is elongate and fastened to the two suspension parts (16, 17) by means of its end regions (27, 28) that are spaced the furthest apart from one another
and
an internal pressure within the deformable fluid suspension element (18) is actively varied from the exterior according to an intensity of an introduced oscillation and/or a measured suspension path (32, 33) in order to adapt the spring characteristic curve to the current introduced oscillation.

11. Method according to claim 10,
**characterised in that**
the internal pressure is actively increased from the exterior either prior to or during a first suspension movement (19A) in the main suspension direction (19), whereas the internal pressure is actively reduced either prior to or during a return suspension movement (19B) counter to the first suspension movement (19A) in order to prevent an escalation due to excessive restoring forces of the deformable fluid suspension element (18).

## Revendications

1. Siège de véhicule (1) ayant une partie siège (5) s'étendant dans la direction de la longueur du véhicule (X) et dans la direction de la largeur du véhicule (Y) ainsi qu'une partie dossier (6) et une sous-structure de siège (9) pour la suspension et/ou l'amortissement au moins de la partie siège (5) par rapport à une carrosserie (10) d'un véhicule (2), dans lequel la sous-structure de siège (9) comporte au moins un dispositif de suspension horizontale (15) ayant une première partie de suspension (16), une autre partie de suspension (17) déplaçable par rapport à celle-ci et un élément de suspension fluide déformable (18) pour la suspension de la partie siège (5) par rapport à la carrosserie (10) dans la direction de la longueur du véhicule (X) et/ou dans la direction de la largeur du véhicule (Y), l'élément de suspension fluide déformable (18) étant disposé avec une première zone de liaison (20) sur la première partie de suspension (16) et une autre zone de liaison (22) sur l'autre partie de suspension (17), l'élément de suspension fluide déformable (18) étant disposé entre les deux parties de suspension (16, 17) de telle sorte qu'il est déformé uniquement par ces deux parties de suspension (16, 17) lors d'un déplacement relatif des deux parties de suspension (16, 17) l'une par rapport à l'autre,
**caractérisé par le fait que**
l'élément de suspension fluide déformable (18) a une configuration allongée et est fixé aux deux parties de suspension (16, 17) par chacune de ses zones d'extrémité (27, 28) les plus espacées l'une de l'autre.

2. Siège de véhicule (1) selon la revendication 1,
**caractérisé par le fait que**
les deux zones de liaison (20, 22) de l'élément de suspension fluide déformable (18) sont les seules zones d'engagement au moyen desquelles l'élément de suspension fluide déformable (18) est déformable lors du déplacement relatif des deux parties de suspension (16, 17) l'une par rapport à l'autre.

3. Siège de véhicule (1) selon l'une des revendications 1 ou 2,
**caractérisé par le fait que**
l'élément de suspension fluide déformable (18) est toujours maintenu et guidé uniquement par les deux parties de suspension (16, 17) disposées espacées l'une de l'autre transversalement à la direction de suspension principale (19).

4. Siège de véhicule (1) selon l'une des revendications 1 à 3,
**caractérisé par le fait que**
l'élément de suspension fluide déformable (18) est disposé, au moins dans la direction de suspension principale (19), de façon à osciller librement entre les deux parties de suspension (16, 17).

5. Siège de véhicule (1) selon l'une des revendications 1 à 4,
**caractérisé par le fait que**
l'élément de suspension déformable (18) est fixé à l'une des deux parties de suspension (16, 17) au moyen d'un support fixe (23) et à l'autre partie de suspension (16, 17) au moyen d'un support libre (21), où en particulier le support libre (21) comporte une articulation tournante (25).

6. Siège de véhicule (1) selon l'une des revendications 1 à 5,
**caractérisé par le fait que**
l'élément de suspension fluide déformable (18) présente, à l'une de ses extrémités (27), un dispositif de compensation de longueur (26) qui agit transversalement à la direction de suspension principale (19).

7. Siège de véhicule (1) selon la revendication 6,
**caractérisé par le fait que**
le dispositif de compensation de longueur (26) comporte un élément bras de levier (24), lequel est disposé de manière articulée sur l'une des deux parties de suspension (16, 17).

8. Siège de véhicule (1) selon l'une des revendications 1 à 7,
**caractérisé par le fait que**
les deux zones de liaison (20, 22) de l'élément de suspension fluide déformable (18) sont maintenues sur les deux parties de suspension (16, 17) de façon à pouvoir être déplacées parallèlement l'une à l'autre dans la direction de suspension principale (19).

9. Siège de véhicule (1) selon l'une des revendications 1 à 8,
**caractérisé par le fait que**
l'élément de suspension fluide déformable (18) comporte un corps principal allongé, tubulaire et élastique (30), lequel présente une cavité fermée (31) qui peut être remplie par un volume de fluide de suspension conformément à un trajet de suspension mesuré (32, 33).

10. Procédé pour la suspension de deux parties de suspension (16, 17) déplaçables l'une par rapport à l'autre d'un dispositif de suspension horizontale (15) d'un siège de véhicule (1) comportant une partie siège (5) et une partie dossier (6), dans lequel les deux parties de suspension (16, 17) sont suspendues élastiquement l'une par rapport à l'autre au moyen d'un élément de suspension fluide déformable (18),
**caractérisé par le fait que**
l'élément de suspension fluide déformable (18) a une configuration allongée et est fixé aux deux parties de suspension (16, 17) par chacune de ses zones d'extrémité (27, 28) les plus espacées l'une de l'autre
et
une pression interne à l'intérieur de l'élément de suspension fluide déformable (18) est amenée à varier de manière active à partir de l'extérieur conformément à une intensité d'une oscillation introduite et/ou un trajet de suspension mesuré (32, 33) pour adapter la caractéristique de suspension à l'oscillation introduite courante.

11. Procédé selon la revendication 10,
**caractérisé par le fait que**
la pression interne est augmentée de manière active à partir de l'extérieur avant ou pendant un premier déplacement de suspension (19A) dans la direction de suspension principale (19), alors que la pression interne est réduite de manière active avant ou pendant un déplacement de suspension de rappel (19B) opposé au premier déplacement de suspension (19A) afin d'empêcher une accumulation d'oscillations en raison de forces de rappel excessives de l'élément de suspension fluide déformable (18).
